(19) **Europäisches Patentamt**
**European Patent Office**
**Office européen des brevets**

(11) **EP 4 764 905 A1**

(12) **EUROPEAN PATENT APPLICATION**
published in accordance with Art. 153(4) EPC

(43) Date of publication:
**24.06.2026 Bulletin 2026/26**

(21) Application number: **24853418.2**

(22) Date of filing: **04.07.2024**

(51) International Patent Classification (IPC):
**G06F 18/24** (2023.01)

(52) Cooperative Patent Classification (CPC):
**G06F 18/23; G06F 18/24; H04L 41/0631;
H04L 41/0677; H04L 41/14; H04L 41/16**

(86) International application number:
**PCT/CN2024/103714**

(87) International publication number:
**WO 2025/036003 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.08.2023 CN 202311027975**

(71) Applicant: **Cloud Intelligence Assets Holding
(Singapore)
Private Limited
Singapore 189554 (SG)**

(72) Inventors:
• **GAN, Yu**
**Hangzhou, Zhejiang 310024 (CN)**

• **LIU, Guiyang**
**Hangzhou, Zhejiang 310024 (CN)**
• **ZHANG, Xin**
**Hangzhou, Zhejiang 310024 (CN)**
• **LIU, Jinbu**
**Shanghai 200120 (CN)**
• **CHE, Hongshu**
**Hangzhou, Zhejiang 310024 (CN)**
• **SUN, Tingtao**
**Hangzhou, Zhejiang 310024 (CN)**
• **ZHOU, Qi**
**Hangzhou, Zhejiang 310024 (CN)**

(74) Representative: **Barker Brettell LLP
100 Hagley Road
Edgbaston
Birmingham B16 8QQ (GB)**

(54) **ROOT CAUSE LOCATION METHOD, SYSTEM AND DEVICE**

(57) Embodiments of the present description provide a root cause location method, system and device. The root cause locating method comprises: acquiring historical link data corresponding to a microservice, and determining a target anomaly location model corresponding to the historical link data; determining link data sets to be processed corresponding to the microservice, clustering said link data sets, and determining cluster center link data on the basis of a clustering result; inputting the cluster center link data into the target anomaly location model to obtain abnormal link node information corresponding to the cluster center link data; and on the basis of the abnormal link node information, determining a target abnormal link corresponding to the microservice, and determining an abnormal link node in the target abnormal link. Model fine adjustment is carried out on the basis of an initial anomaly location model, so that the initial anomaly location model has wide applicability and high generalization ability. Cluster center link data is selected for root cause location, so that the root cause location speed of the microservice is increased.

FIG. 1

## Description

### TECHNICAL FIELD

Embodiments of this specification relate to the field of computer technologies, and in particular, to a root cause localization method.

### BACKGROUND

With the development of computer technologies, microservices on a cloud are developing rapidly. A microservice architecture is a service architecture that is highly scalable, highly available, and easy to maintain and update. The microservice architecture is used in an increasing number of systems because of faster delivery, better scalability, and greater autonomy thereof. As the microservice architecture becomes increasingly popular, security issues of microservices also attract much attention.

In the related art, efforts in microservice performance debugging are based on correlations, empirical thresholds or non-scalable algorithms and deep learning models, resulting in low accuracy and slow speed. When microservices scale up, algorithms for performing root cause localization based on experience and rules become insufficiently reliable, or even fail to implement root cause localization. Therefore, when a fault occurs, a new method needs to be used for fault root cause localization. Root cause localization methods based on experience and rules lack universality. Therefore, an effective root cause localization method is urgently needed to solve the foregoing problem.

### SUMMARY

Based on the above, embodiments of this specification provide a root cause localization method. One or more embodiments of this specification relate to a root cause localization apparatus, a root cause localization system, a computing device, a computer-readable storage medium, and a computer program, to resolve technical defects in the related art.

According to a first aspect of the embodiments of this specification, a root cause localization method is provided, including:

obtaining historical trace data corresponding to a microservice application, and determining a target anomaly localization model corresponding to the historical trace data;
determining a to-be-processed trace data set corresponding to the microservice application, clustering the to-be-processed trace data set, and determining centroid trace data based on a clustering result;
inputting the centroid trace data into the target anomaly localization model, to obtain anomalous trace node information corresponding to the centroid trace data; and
determining a target anomalous trace corresponding to the microservice application based on the anomalous trace node information, and determining an anomalous trace node within the target anomalous trace.

According to a second aspect of the embodiments of this specification, a root cause localization apparatus is provided, including:

an obtaining module, configured to obtain historical trace data corresponding to a microservice application, and determine a target anomaly localization model corresponding to the historical trace data;
a clustering module, configured to determine a to-be-processed trace data set corresponding to the microservice application, cluster the to-be-processed trace data set, and determine centroid trace data based on a clustering result;
an inputting module, configured to input the centroid trace data into the target anomaly localization model to obtain anomalous trace node information corresponding to the centroid trace data; and
a determining module, configured to determine a target anomalous trace corresponding to the microservice application based on the anomalous trace node information, and determine an anomalous trace node within the target anomalous trace.

According to a third aspect of the embodiments of this specification, a root cause localization system is provided. The system includes a server and a client.

The client is configured to submit an anomaly localization request to the server for a target microservice application.

The server is configured to: parse the anomaly localization request to obtain debugging trace data and target trace data; update an initial anomaly localization model to a to-be-used anomaly localization model based on the debugging trace data; cluster the target trace data, and determine to-be-inputted trace data based on a clustering result; input the to-be-inputted trace data to the to-be-used anomaly localization model to obtain anomalous node information corresponding to the target microservice application; determine an anomalous node based on the anomalous node information, and generate anomaly feedback information based on the anomalous node and the anomalous node information; and send the anomaly feedback information to the client as a response to the anomaly localization request.

The client is configured to perform anomaly processing on the target microservice application based on the anomaly feedback information.

According to a fourth aspect of the embodiments of this specification, a computing device is provided. The computing device includes:

a memory and a processor.

The memory is configured to store computer-executable instructions, the processor is configured to execute the computer-executable instructions, and when the computer-executable instructions are executed by the processor, the steps of the foregoing root cause localization method are implemented.

According to a fifth aspect of the embodiments of this specification, a computer-readable storage medium is provided which stores computer-executable instructions. When the computer-executable instructions are executed by a processor, the steps of the foregoing root cause localization method are implemented.

According to a sixth aspect of the embodiments of this specification, a computer program is provided. The computer program, when executed in a computer, causes the computer to perform the steps of the foregoing root cause localization method.

In an embodiment of this specification, the historical trace data corresponding to the microservice application is obtained, and the target anomaly localization model corresponding to the historical trace data is determined; the to-be-processed trace data set corresponding to the microservice application is determined, the to-be-processed trace data set is clustered, and the centroid trace data is determined based on the clustering result; the centroid trace data is inputted into the target anomaly localization model to obtain the anomalous trace node information corresponding to the centroid trace data; and the target anomalous trace corresponding to the microservice application is determined based on the anomalous trace node information, and the anomalous trace node within the target anomalous trace is determined . Model fine-tuning is performed based on the initial anomaly localization model, so that the adjusted initial anomaly localization model is applicable to a specific microservice application, and the initial anomaly localization model has relatively wide applicability and a relatively strong generalization capability. When the root cause localization is performed through the target anomaly localization model, the centroid trace data is selected to perform the root cause localization, thereby increasing a root cause localization speed of the microservice application.

## BRIEF DESCRIPTION OF THE DRAWINGS

FIG. 1 is a schematic structural diagram of a root cause localization method according to an embodiment of this specification;

FIG. 2 is a flowchart of a root cause localization method according to an embodiment of this specification;

FIG. 3 is a flowchart of a processing process of a root cause localization method according to an embodiment of this specification;

FIG. 4 is a schematic diagram of model training of a root cause localization method according to an embodiment of this specification;

FIG. 5 is a schematic diagram of model application of a root cause localization method according to an embodiment of this specification;

FIG. 6 is a schematic diagram of synthesizing a microservice of a root cause localization method according to an embodiment of this specification;

FIG. 7 is a schematic structural diagram of a root cause localization apparatus according to an embodiment of this specification;

FIG. 8 is an architectural diagram of a root cause localization system according to an embodiment of this specification;

FIG. 9 is a structural block diagram of a computing device according to an embodiment of this specification.

## DESCRIPTION OF EMBODIMENTS

In the following description, numerous specific details are set forth to facilitate a thorough understanding of this specification. However, this specification may be implemented in many other manners different from those described herein. A person skilled in the art may make similar extensions without departing from the connotation of this specification. Therefore, this specification is not limited to the specific embodiments disclosed below.

The terms used in one or more embodiments of this specification are used to describe the specific embodiments but are not intended to limit one or more embodiments of this specification. Unless other meanings are clearly indicated in the context, "a", "the", and "this" in a singular form used in the one or more embodiments of this specification and the appended claims are also intended to include a plural form. It should be further understood that the term "and/or" as used in one or more embodiments of this specification refers to and includes any or all possible combinations of one or more associated listed items.

It should be understood that although the terms "first," "second," and the like may be used to describe various information in one or more embodiments of this specification, such information should not be limited to these terms. These terms are merely used to distinguish between information of the same type. For example, without departing from the scope of one or more embodiments of this specification, the first may also be referred to as the second, and likewise the second may be referred to as the first. Depending on the context, for example, a word "if" used herein may be interpreted as "in a case that", "when", or "in response to determination".

In addition, it should be noted that user information (including but not limited to user equipment information, user personal information, and the like) and data (including but not limited to data for analysis, stored data, displayed data, and the like) involved in one or more embodiments of this specification are all authorized by the user or information and data fully authorized by all parties. The collection, use, and processing of relevant data need to conform to relevant laws, regulations, and standards of relevant countries and regions, and provide corresponding operation portals for the user to choose to authorize or refuse.

Noun terms in the one or more embodiments of this specification are described first.

Trace: A link trace starts from when a request initiated by a client reaches a boundary of a system, and each service through which the request flows is recorded until a response is returned to the client. This entire process is referred to as a "trace".

Span: In a distributed system, a trace link is used to record a call situation of a request among a plurality of services, including a start point and an end point of the request, and a service through which the request passes. The span is a basic unit in a trace link, and represents a process of a service processing a request, including a service receiving the request, processing the request, returning a response, and the like. Specifically, each Span includes information such as a unique identifier (Span ID), an identifier of a parent Span (Parent ID), a start time, an end time, a duration of the Span, an operation name of the Span, and a label of the Span. When a request passes through a service, the service creates a new Span object, sets its Span ID to an ID of the parent Span, and sets the start time as a current time. After completing request processing, the service sets the end time as the current time and sends Span information to the Trace link, so that a subsequent service may acquire the information.

MicroService: Microservice refers to an architecture and an organization method for developing software, and the software is composed of small independent services that communicate through a clearly-defined API.

Few-shot Learning: Few-shot learning refers to a machine learning task of generalization and identification of new data through learning of features or rules of a small quantity of data samples in the case of a small amount of labeled data. A conventional machine learning model needs a large amount of labeled data to train a model. However, the few-shot learning can perform learning with an extremely small amount of data and achieves a good effect, and has a relatively high application value.

SBert-SBERT: Sentence-BERT is a BERT-based pre-training model, and is mainly configured to generate vector representation of text, and especially to calculate a similarity between sentences. Different from a conventional BERT model that uses a text sequence as an input, the SBERT introduces some special training technologies based on the BERT, such as sentence pair construction and multi-task learning, so that the model can learn more information about sentence semantics in a pre-training stage, and encodes the information into a vector representation with a fixed length. The vector representation may be used to calculate a similarity between sentences, such as a cosine similarity and a Manhatton distance, so that tasks such as text matching, semantic search, and sentiment analysis can be implemented.

Counterfactual: It refers to performing a reverse inference on an event that has happened. In other words, it is assumed that the event that has happened is different, opposite, or does not happen, and then a result under these assumptions is observed. In short, it is a thinking manner of "what is a result if that thing does not happen at that time?". This thinking manner can help people to better understand and analyze an event that has already happened, and draw some valuable conclusions and lessons from the event, and can also help people predict and avoid a problem that potentially occurs in the future.

GNN (Graph Neural Network, GNN): Graph neural network is a deep learning model based on a graph structure, and is mainly used for processing graph data. Commonly speaking, the graph data is analyzed and processed through a deep learning method. For example, we can consider data such as a friendship in a social network, a transportation route in logistics, and a molecular structure in a chemical reaction as the graph data. The graph neural network may learn features and relationships in these pieces of graph data to perform tasks such as classification, clustering, and prediction on nodes and edges in the graph. Different from conventional models such as a convolutional neural network and a recurrent neural network, the graph neural network is mainly designed and optimized based on a graph structure and a graph algorithm in a graph theory, and has some unique operations such as a graph convolution and a graph attention mechanism. Through these operations, the graph neural network can effectively process different types of graph data, and achieve a plurality of successful applications in various tasks, such as node classification, graph classification, and trace prediction.

GIN (Graph Isomorphism Network, GIN): Graph isomorphism network is a graph neural network, and is an improved algorithm based on a graph convolutional neural network (Graph Convolutional Network, GCN) proposed by Xu and others. The GIN is intended to perform tasks such as classification, clustering, and reconstruction on a graph by learning a local neighborhood substructure between nodes.

Jaccard index: Jaccard index (Jaccard index) is an index used to calculate a similarity between two sets, and has a value that is in a range of 0 to 1. Its definition is a size of an intersection set of two sets divided by a size of a union set of the two sets, namely, $J(A, B)=|A\cap B|/|A\cup B|$, where A and B are two sets, and |A| represents a size (a quantity of elements) of the set A. The Jaccard index may be used to evaluate a similarity between two sets on elements. A value closer to 1 indicates a higher similarity between the two sets. A value closer to 0 indicates a lower similarity between the two sets. In a practical application, the Jaccard index is usually used in fields such as text processing, image processing, and data mining. For example, the Jaccard index is used in search engines to calculate similarities between queries and documents, or used in cluster analysis to calculate similarities between different clusters.

With the development of computer technologies, microservices on a cloud are developing rapidly. A microservice architecture is a service architecture that is highly scalable, highly available, and easy to maintain and update. The microservice architecture is used in an increasing number of systems because of faster delivery, better scalability, and greater autonomy thereof. As the microservice architecture becomes increasingly popular, security problems of microservices also attract much attention. Continuous expansion of a microservice scale makes an RPC dependency diagram complex, exacerbates a tail-of-scale effect (tail-of-scale effect), and makes many empirical rules unreliable. Previous efforts on microservice performance debugging are based on correlations, empirical thresholds or inextensible algorithms, and deep learning models, none of which utilizes a microservice benchmark having a comparable production service scale for quantitative evaluation, making their accuracy and performance questionable in production scale microservices. When microservices scale, many heuristic methods for performing root cause analysis algorithms based on experience and rules become insufficiently reliable, and even cannot be verified. In a microservice architecture, because different services may run on different nodes and communication between the services may be affected by factors such as a network delay and packet loss, a new method needs to be used for fault analysis and resolution when a fault occurs. In this case, more advanced data analysis technologies and tools need to be used to help identify and repair faults.

In the related art, efforts on microservice performance debugging are based on correlations, empirical thresholds or inextensible algorithms and deep learning models, resulting in low accuracy and slow speed. When microservices scale up, algorithms for performing root cause localization based on experience and rules become insufficiently reliable, or even fail to implement root cause localization. Therefore, when a fault occurs, a new method needs to be used for fault root cause localization. To perform root cause diagnosis on Trace data of a microservice in a production environment and improve problem solving efficiency, this embodiment provides a root cause localization method.

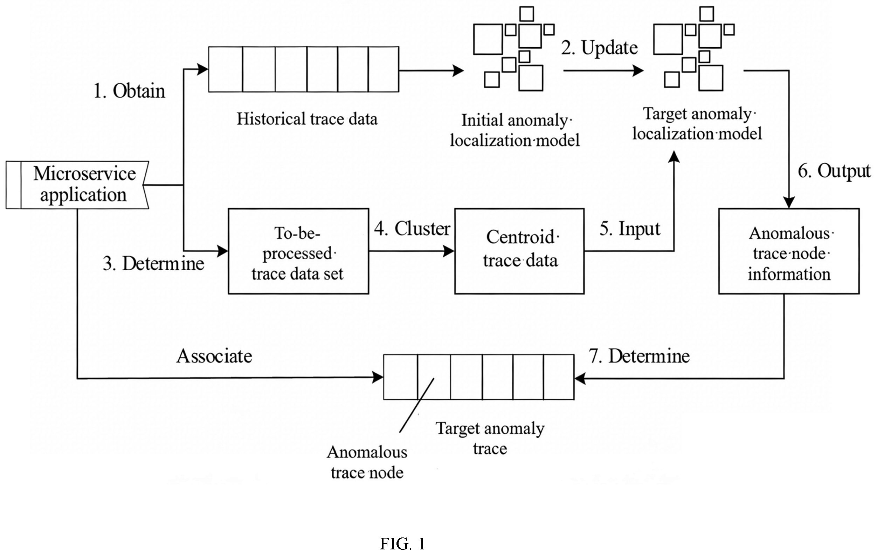

FIG. 1 shows a schematic structural diagram of a root cause localization method according to an embodiment of this specification. As shown in FIG. 1, in a scenario of a microservice application, historical trace data corresponding to the microservice application is obtained. A target anomaly localization model used for performing root cause localization is determined. The target anomaly localization model may be obtained by performing fine tuning on an initial anomaly localization model by using the historical trace data as a training sample. In other words, the initial anomaly localization model is updated based on the historical trace data to obtain the target anomaly localization model. A to-be-processed trace data set corresponding to the microservice application is determined, the to-be-processed trace data set is clustered, and centroid trace data is determined based on a clustering result. The centroid trace data is inputted into the target anomaly localization model to obtain anomalous trace node information corresponding to the centroid trace data. A target anomalous trace corresponding to the microservice application is determined based on the anomalous trace node information, and an anomalous trace node is determined within the target anomalous trace. Root cause localization for the to-be-processed trace data is implemented.

Model fine-tuning is performed based on the initial anomaly localization model, so that the adjusted initial anomaly localization model is applicable to a specific microservice application, and the initial anomaly localization model has relatively wide applicability and a relatively strong generalization capability. When the root cause localization is performed through the target anomaly localization model, the centroid trace data is selected to perform the root cause localization, thereby increasing a root cause localization speed of the microservice application.

In this specification, a root cause localization method is provided. This specification also relates to a root cause localization apparatus, a root cause localization system, a computing device, and a computer-readable storage medium. Detailed descriptions are provided one by one in the following embodiments.

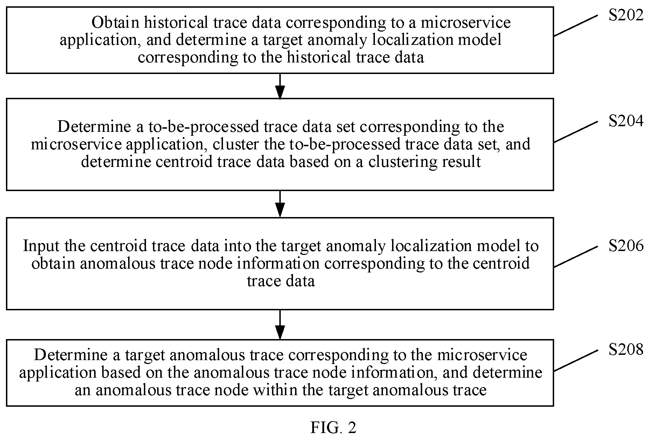

Referring to FIG. 2, FIG. 2 shows a flowchart of a root cause localization method according to an embodiment of this specification. The method specifically includes the following steps.

Step S202: Obtain historical trace data corresponding to a microservice application, and determine a target anomaly localization model corresponding to the historical trace data.

Specifically, a microservice is an architecture and organization method for software development, where software is composed of small independent services that perform communication through a clearly defined API. Correspondingly, the microservice application is a business based on a microservice architecture, and types of services include, but are not limited to, calculation, storage, and the like. The historical trace data refers to Trace data generated under the microservice application. The target anomaly localization model corresponds to the microservice application and has a capability of identifying anomalous data in trace data corresponding to the microservice application.

Based on the above, a microservice application in a target field is determined. A small amount of trace data generated under the microservice application is obtained as the historical trace data. Model training is performed based on the small amount of historical trace data, so that a target anomaly localization model obtained through the training matches the microservice application in the target field. The target anomaly localization model can identify an anomaly in the trace data generated under the microservice application in the target field, and perform root cause localization for the anomaly.

In a practical application, when the target anomaly localization model is determined, an initial anomaly localization model having an anomaly identification capability may be first obtained, and then the initial anomaly localization model is trained based on obtained historical trace data, to obtain the target anomaly localization model corresponding to the field of the microservice application. In addition, when the target heritage localization model is determined, a training set may be constructed based on the obtained historical trace data corresponding to the microservice application, and the initial anomaly localization model used for anomaly localization is constructed. Then, the initial anomaly localization model is trained based on the training set until a target anomaly localization model that satisfies a training stop condition is obtained.

Further, to enable the target anomaly localization model to have a better anomaly localization capability, training may be performed based on the initial anomaly localization model to obtain the target anomaly localization model. The initial anomaly localization model is used as a prediction model having capabilities of anomaly detection and root cause localization. Considering a generalization capability of the initial localization model, abundant training samples may be considered and used during model training, and trace data corresponding to at least two initial microservice applications may be obtained to construct a trace data sample set. A specific implementation is as follows.

An initial anomaly localization model is updated to the target anomaly localization model corresponding to the historical trace data, where training of the initial anomaly localization model includes: determining a to-be-trained trace data set based on at least two initial microservice applications; constructing a trace data sample set based on at least two pieces of to-be-trained trace data included in the to-be-trained trace data set; and training the to-be-trained anomaly localization model with the trace data sample set until an initial anomaly localization model that satisfies a training stop condition is obtained.

Specifically, an initial microservice application may be a microservice application in any business scenario. The business scenario may be a computing business, a storage business, or the like. The to-be-trained trace data set refers to a data set composed of collected trace data corresponding to initial microservice applications. The trace data sample set refers to a sample set used for performing model training. Correspondingly, the initial anomaly localization model is an anomaly localization model having a root cause localization capability after the to-be-trained anomaly localization model is trained based on the trace data sample set. When the trace data samples included in the trace data sample set are collected, a plurality of sampling methods may exist. For example, for any microservice system, after Trace data in a period of time is divided based on different microservice entries, an overall delay distribution of each service entry Trace in this period of time needs to be calculated. The Trace data is sampled based on the calculated delay distribution, to obtain complete original training data. The initial anomaly localization model is used for performing root cause localization on the Trace data and determining a root cause node where an anomaly is located in the Trace data. The target anomaly localization model refers to an anomaly localization model obtained after the initial anomaly localization model is updated. The historical trace data is used to adjust the initial anomaly localization model, so that the target anomaly localization model has a capability of identifying anomalous data in the trace data corresponding to the microservice application.

Based on the above, the at least two initial microservice applications are determined, and trace data in each initial microservice application is separately collected to construct the to-be-trained trace data set. At least two pieces of to-be-trained trace data included in the to-be-trained trace data set is determined. Each piece of to-be-trained trace data is processed, to obtain a trace data sample corresponding to the to-be-trained trace data and to construct the trace data sample set. The to-be-trained anomaly localization model is trained with the trace data sample set, so that causal modeling on the trace data sample is implemented based on the to-be-trained anomaly localization model. Embedding coding is performed on the trace data sample through the to-be-trained anomaly localization model, and then the to-be-trained anomaly localization model is trained through a particular loss function, so that the to-be-trained anomaly localization model learns embedded features until the initial anomaly localization model that satisfies a training stop condition is obtained.

The initial anomaly localization model is determined. The initial anomaly localization model is updated based on the small amount of historical trace data, so that an updated initial anomaly localization model matches the microservice application of the target field. The initial anomaly localization model is updated to the target anomaly localization model. Therefore, the target anomaly localization model can identify an anomaly in trace data generated under the microservice application in the target field, and perform root cause localization for the anomaly.

In a practical application, the initial anomaly localization model is obtained through training based on trace data of a plurality of microservice applications in a plurality of fields. Therefore, the initial anomaly localization model has a strong generalization capability. When anomaly localization is performed through the initial anomaly localization model, fine tuning may be performed on the initial anomaly localization model based on trace data under different microservice applications, so that root cause localization of the trace data is performed through the initial anomaly localization model after the fine tuning. When root cause localization and anomaly root cause analysis are performed, a counterfactual method may be used. A counterfactual query refers to what are an expected trace duration and an error status if some spans (Spans) are restored to a normal status in a particular case. In other words, this query is what is an operational situation of an entire system based on an assumed situation, namely, an assumption that some spans are in a normal status. The initial anomaly localization model restores a service to the normal status through iteration, predicts a counterfactual trace status, and checks whether the normal status is predicted, thereby locating a root cause of an anomaly.

For example, an initial microservice application used for providing a computing service and an initial microservice application used for providing a storage service are determined. Trace data of each microservice application is obtained, and a trace data sample set is constructed. A GNN-based to-be-trained anomaly localization model is trained with the trace data sample set until the initial anomaly localization model that satisfies a training stop condition is obtained.

Based on the above, the trace data sample set for training the to-be-trained anomaly localization model is constructed based on the trace data of the at least two initial microservice applications, so that the to-be-trained anomaly localization model can adapt to a plurality of types of microservice applications, and the to-be-trained anomaly localization model on which training is completed has a relatively good generalization capability.

Further, considering that trace data of the microservice application includes a plurality of types of data such as a type, a start time, an end time, and a status, the various types of data in the trace data may be fully used when the anomaly localization model is trained based on the trace data in consideration of model prediction capability. A specific implementation is as follows.

The to-be-trained trace data is converted into a text vector, and time information and status information of the to-be-trained trace data are determined; and the text vector is updated based on the time information and the status information, and a trace data sample corresponding to the to-be-trained trace data is constructed based on the updated text vector.

Specifically, the text vector may be understood as an embedded feature representation of the to-be-trained trace data. The text vector may be generated through a plurality of manners such as a Bert model. The time information may include information such as a start time, an end time, and a consuming time of the to-be-trained trace data. The status information may be determined based on the to-be-trained trace data. In other words, a status code or a trace status included in the to-be-trained trace data is used as the status information. The time information may further be a start time, an end time, and an exclusive time that correspond to a trace node included in the to-be-trained trace data. The status information may be node status information of the trace node included in the to-be-trained trace data.

Based on this, the to-be-trained trace data is converted into the text vector through an encoding model or an encoding algorithm. The time information and the status information of the trained trace data is determined. The text vector is updated based on the time information and the status information. The time information and the status information are integrated into the text vector. A trace data sample corresponding to the to-be-trained trace data is constructed based on the updated text vector.

Still referring to the foregoing example, the to-be-trained trace data is converted into the text vector through a Bert model or an SBert model. Based on a start time and an end time of the Span in the to-be-trained trace data, an exclusive time of the Span is calculated, and is used as the time information corresponding to the to-be-trained trace data. When the exclusive time of the Span is calculated, a relationship between parent and child Spans further needs to be considered. If a Span is a child Span of its parent Span, its exclusive time should be a time of its parent Span minus a sum of times of child Spans. If a Span has a start time of T1 and an end time of T2, and the Span has two child Spans having start times respectively as T3 and T4 and end times respectively as T5 and T6, the exclusive time of that Span is (T2-T1)-(T5-T3)-(T6-T4).

Based on the above, the time information and the status information of trace data are integrated into the to-be-trained trace data, so that the anomaly localization model is trained using the to-be-trained trace data, thereby improving prediction accuracy of the anomaly localization model.

Further, considering that the initial anomaly localization model has relatively high training costs, a relatively universal method to improve utilization of the initial anomaly localization model is to improve a generalization capability of the initial anomaly localization model, so that the initial anomaly localization model has relatively high applicability. A specific implementation is as follows.

The at least two initial microservice applications are determined; at least two pieces of trace data respectively corresponding to the at least two initial microservice applications are collected based on a preset data collection strategy; the at least two pieces of trace data respectively corresponding to the at least two initial microservice applications are divided based on a preset data division rule, and a to-be-trained trace data subset corresponding to each initial microservice application is determined based on a division result; and the to-be-trained trace data set is constructed based on at least two to-be-trained trace data subsets.

Specifically, the data collection strategy may be collecting data through a data collection tool, or obtaining data through manual collection. The data division rule may be division based on a data collection time or a data generation time, or division based on a data type. The data type may be calculation type data or storage type data.

Based on the above, at least two initial microservice applications of a plurality of types such as a traffic node, a disk IO intensive node, and a computation intensive node are determined. The at least two pieces of trace data respectively corresponding to the at least two initial microservice applications are collected based on the preset data collection strategy. The at least two pieces of trace data respectively corresponding to the at least two initial microservice applications are divided based on the preset data division rule, and the to-be-trained trace data subset corresponding to each initial microservice application is determined based on the division result; and the to-be-trained trace data set is constructed based on at least two to-be-trained trace data subsets.

Still referring to the foregoing example, a microservice application whose data needs to be collected is selected in microservice applications of a plurality of types such as the traffic node, the disk IO intensive node, and the computation intensive node, and trace data generated under each microservice application is obtained. Data division is performed on the obtained trace data generated under each microservice application, to implement data classification. Further, a trace data subset corresponding to each microservice application is determined based on a classification result, and the to-be-trained trace data set of a plurality of data set types is constructed based on the trace data subsets.

Based on the above, the to-be-trained trace data set is constructed based on the trace data of the at least two initial microservice applications, thereby enriching data types and business types in the to-be-trained trace data set, and improving a model generalization capability and model prediction accuracy after a training anomaly localization model is trained.

Further, considering complexity of a data structure of to-be-trained trace data, various types of data in the to-be-trained trace data may be integrated. Therefore, when the anomaly localization model is subsequently trained, the anomaly localization model can sufficiently learn features of sample data, thereby improving a prediction capability of the anomaly localization model. A specific implementation is as follows.

Encoding processing is performed on the to-be-trained trace data, and the text vector corresponding to the to-be-trained trace data is determined based on a processing result; a start time and an end time of sub-trace data included in the to-be-trained trace data are calculated, and time information corresponding to the to-be-trained trace data is determined based on a calculation result; and sub-status information of the sub-trace data included in the to-be-trained trace data is used as status information of the to-be-trained trace data.

Based on the above, encoding processing is performed on the to-be-trained trace data using the SBert model. The text vector corresponding to the to-be-trained trace data is determined based on a processing result. The sub-trace data included in the to-be-trained trace data is determined. An exclusive time of the sub-trace data is calculated based on the start time and the end time of the sub-trace data. The exclusive time of the sub-trace data included in the to-be-trained trace data is used as the time information of the to-be-trained trace data. The sub-status information of the sub-trace data included in the to-be-trained trace data is used as the status information of the to-be-trained trace data.

Still referring to the foregoing example, a Service and a name in Trace data are encoded with semantic information (converted into a vector of 768 dimensions through the SBert). During encoding, a special character and a hexadecimal code need to be deleted, and upper-case and lower-case letters are uniformly converted. An exclusive time of a Span (sub-trace data) is calculated. A duration of a synchronization span of a non-leaf node includes a time spent in the service and a waiting time for a child span thereof. The duration of the node is separated from the waiting time, so as to locate a root cause for a high-delay Trace.

Based on the above, various types of data such as the time information and the status information in the to-be-trained trace data are integrated. Therefore, when the anomaly localization model is subsequently trained, the anomaly localization model can sufficiently learn features of the sample data, thereby improving the prediction capability of the anomaly localization model.

Step S204: Determine a to-be-processed trace data set corresponding to the microservice application, cluster the to-be-processed trace data set, and determine centroid trace data based on a clustering result.

Specifically, after the historical trace data corresponding to the microservice application is obtained and the initial anomaly localization model is updated to the target anomaly localization model based on the historical trace data as described above, the to-be-processed trace data set corresponding to the microservice application may be determined, the to-be-processed trace data set is clustered, and the centroid trace data is determined based on the clustering result.

The to-be-processed trace data set refers to a trace data set obtained by performing trace data collection on the microservice application. The to-be-processed trace data set includes trace data in which an anomaly occurs. For a clustering method, a DBSCAN algorithm, a k-means algorithm, or the like may be used, which is not limited in this embodiment. The centroid trace data refers to to-be-processed trace data of a cluster centroid obtained after clustering processing is performed on the to-be-processed trace data set, and is used to be inputted to the target anomaly localization model for anomaly detection.

Based on the above, after the historical trace data corresponding to the microservice application is obtained and the initial anomaly localization model is updated to the target anomaly localization model based on the historical trace data as described above, the trace data collection is performed on the microservice application, and the trace data corresponding to the microservice application is collected using the trace data collection strategy, which is used as the to-be-processed trace data set. A distance index corresponding to the to-be-processed trace data is determined. Clustering is performed on the to-be-processed trace data set based on the distance index. The centroid trace data is determined based on the clustering result.

In a practical application, a Span identifier is composed of a label thereof: a (Service, name, kind) tuple, an error status thereof, and labels of all ancestor Spans within a maximum distance of d_max, so as to reflect a structure and a status of a given Trace. Different Spans sharing a same identifier are merged in a set, and have a weight equal to a sum of the durations thereof. When two Traces have similar structures and execution statuses, same elements with similar weights may be found in the two Trace sets. We use an extended Jaccard index to calculate a similarity of Trace sets. Clustering is performed through a DBSCAN algorithm to obtain a Trace cluster having similar structures, and a representative (cluster centroid) Trace link is found therefrom as a Trace link to be subjected to root cause analysis.

Step S206: Input the centroid trace data into the target anomaly localization model to obtain anomalous trace node information corresponding to the centroid trace data.

Specifically, after the to-be-processed trace data set corresponding to the microservice application is determined, the to-be-processed trace data set is clustered, and the centroid trace data based on the clustering result is determined as described above, the centroid trace data may be inputted to the target anomaly localization model, to obtain anomalous trace node information corresponding to the centroid trace data. The anomalous trace node information refers to anomaly description information or anomalous node description information. For example, the anomaly description information records data of a type A, and correspondingly, the anomalous trace node is a node that records the data of the type A. The anomaly description information records data (data or a character string) of B, and correspondingly, the anomalous trace node is a node that records the data of B. The anomalous trace node information may be anomalous information included in the centroid trace data. Types of the anomaly include, but are not limited to, a data anomaly, a label anomaly, a status anomaly, a time anomaly, and a resource anomaly.

Based on the above, after the to-be-processed trace data set corresponding to the microservice application is determined, the to-be-processed trace data set is clustered, and the centroid trace data is determined based on the clustering result as described above, the centroid trace data is inputted to the target anomaly localization model. The target anomaly localization model performs root cause localization on the centroid trace data through a counterfactual method. The target anomaly localization model outputs anomalous trace node information corresponding to the centroid trace data. Further, anomaly analysis and fault recovery are performed based on the anomalous trace node information.

In a practical application, the target anomaly localization model may be an anomaly localization model obtained by performing causal modeling on Trace data using a GNN model. A causal Bayesian network (Causal Bayesian Networks, CBN) based on a Bayesian theory is used to describe propagation of error information in the Trace data. The GIN is used to perform embedding coding on the Trace link data. Learning is performed through a particular loss function, to finally complete learning of embedded features. The loss function may be the following formula (1):

$$Loss = \frac{1}{N} \sum_{i=1}^{N} (\hat{d}_i - d_i)^2 - e_i \log(\hat{e}_i) - (1 - e_i) \log(1 - \hat{e}_i) \qquad (1)$$

where $d_i$ represents a consuming time of a Span; $\hat{d}_i$ represents an exclusive time of a Span; $e_i$ represents an error status of a Span; and $\hat{e}_i$ represents that in process of error propagation of a parent Span, an error of the parent Span, and a duration and an error status of a child Span need to be considered, and a maximum value is selected as an error of the parent Span. Therefore, it is ensured that an error can propagate correctly along a causal DAG (directed acyclic graph).

Further, when the to-be-processed trace data corresponding to the microservice application is determined, data collection may be implemented through an existing data collection technology with the consideration of convenience and accuracy of obtaining the data. A specific implementation is as follows.

At least two pieces of to-be-processed trace data corresponding to the microservice application are obtained based on a preset data obtaining strategy; and the to-be-processed trace data set is constructed through the at least two pieces of to-be-processed trace data.

Based on the above, the trace data of the microservice application is collected based on OpenTelemetry (distributed link trace standard) and the trace data collection tool, and the at least two pieces of to-be-processed trace data corresponding to the microservice application is obtained based on the preset data obtaining strategy. The at least two pieces of to-be-processed trace data are stored in the data set to construct the to-be-processed trace data set.

Still referring to the foregoing example, the OpenTelemetry is composed of a set of APIs and SDK tools, and is used to observe, generate, collect, and export various types of observable data. When the trace data of the microservice is collected, the Trace data of the microservice is collected through the OpenTelemetry. The collected Trace data is stored into a set to construct the to-be-processed trace data set.

Based on the above, the to-be-processed trace data corresponding to the microservice application is obtained through the preset data obtaining strategy, thereby improving efficiency and accuracy for obtaining the trace data.

Further, considering a large amount of trace data under the microservice application, a large amount of computing resources and processing time are consumed to perform anomaly detection and root cause localization on each piece of trace data. To improve efficiency of the anomaly detection and the root cause localization, centroid trace data may be determined through a method in which clustering is performed on the to-be-processed trace data, so that the centroid trace data is inputted to the target anomaly localization model. A specific implementation is as follows.

To-be-processed trace data included in the to-be-processed trace data set is determined; and the to-be-processed trace data set is clustered based on a data structure, a trace status, and a time weight of each to-be-processed trace data in the to-be-processed trace data set, and the centroid trace data is determined based on the clustering result.

Specifically, clustering refers to a process of dividing a set of physical or abstract objects into a plurality of classes consisting of similar objects. A cluster generated through clustering is a set of a group of data objects. The objects are similar to objects in a same cluster, and are different from objects in another cluster. The clustering may be implemented through a clustering algorithm such as a k-means mean algorithm and a DBSCAN algorithm.

Based on the above, the to-be-processed trace data set includes at least two pieces of to-be-processed trace data. The to-be-processed trace data set is clustered based on a data structure such as a name label and a type label, a trace status, and a time weight of each piece of to-be-processed trace data in the to-be-processed trace data set. At least one piece of centroid trace data is determine based on the clustering result.

Still referring to the foregoing example, the Span identifier is composed of a label: a (Service, name, kind) tuple, an error status, and labels of all ancestor Spans within a maximum distance, so as to reflect a structure and a status of a given Trace. Different Spans sharing a same identifier are merged in a set, and its weight is equal to a sum of their durations. When two Traces have similar structures and execution statuses, same elements with similar weights may be found in two Trace sets. We use an extended Jaccard index to calculate a similarity between Trace sets. Clustering is performed through a DBSCAN algorithm to obtain a cluster of Traces having similar structures, and a representative (cluster centroid) trace link is found therefrom as a Trace link to be subjected to root cause analysis.

Based on the above, the to-be-processed trace data set is clustered, and the centroid trace data is determined based on the clustering result, so that the centroid trace data is inputted to the target anomaly localization model to determine the anomalous trace node, thereby improving efficiency of anomaly detection and root cause localization and reducing consumption of computing resources and time.

Step S208: Determine a target anomalous trace corresponding to the microservice application based on the anomalous trace node information, and determine an anomalous trace node within the target anomalous trace.

Specifically, after the centroid trace data is inputted to the target anomaly localization model to obtain the anomalous trace node information corresponding to the centroid trace data as described above, the target anomalous trace corresponding to the microservice application may be determined based on the anomalous trace node information, and the anomalous trace node is determined within the target anomalous trace. The target anomalous trace refers to a microservice application trace corresponding to the anomalous trace node information. Because the target anomalous trace includes at least one trace node, the anomalous trace node is a node where an anomaly occurs within the target anomalous trace.

Based on the above, after the centroid trace data is inputted to the target anomaly localization model to obtain the anomalous trace node information corresponding to the centroid trace data as described above, the target anomalous trace data corresponding to the microservice application is determined based on the anomalous trace node information, the target anomalous trace is determined based on the target anomalous trace data, and the anomalous trace node is determined within the target anomalous trace. This facilitates subsequent anomaly analysis and anomaly processing on the target anomalous trace node to achieve recovery from the anomaly.

Further, considering that the anomalous trace node information includes attribute information such as a trace identifier where an anomaly occurs, the target anomalous trace data is preferentially determined before the target anomalous trace is determined. A specific implementation is as follows.

The target anomalous trace data is determined in the to-be-processed trace data set based on the anomalous trace node information; the target anomalous trace corresponding to the microservice application is determine based on the target anomalous trace data; and the anomalous trace node is determined within the target anomalous trace based on the anomalous trace node information.

Specifically, the target anomalous trace data refers to trace data that has an anomaly in the to-be-processed trace data set. A plurality of anomaly types of anomaly data may exist within the target anomalous trace data, which includes, but is not limited to, a data anomaly, a label anomaly, a status anomaly, a time anomaly, and a resource anomaly.

Based on the above, the target anomalous trace data corresponding to the anomalous trace node information in which an anomaly occurs is determined in the to-be-processed trace data set based on the anomalous trace node information. A target anomalous trace matching the target anomalous trace data in the microservice application is determine based on the target anomalous trace data. The anomalous trace node is determined within the target anomalous trace based on anomalous node information included in the anomalous trace node information.

Still referring to the foregoing example, the anomalous trace node information may include a trace label of an anomalous trace, and a trace node label in which an anomaly occurs within an anomalous trace. The target anomalous trace data corresponding to the anomalous trace node information in which the anomaly occurs is determined in the to-be-processed trace data set base on the trace label included in the anomalous trace node information. A target anomalous trace A corresponding to the target anomalous trace data is determined. A trace node a in which an anomaly occurs is determined within the target anomalous trace A based on the trace node label where the anomaly occurs in the anomalous trace. This facilitates subsequent anomaly processing on the trace node a.

Based on the above, the target anomalous trace corresponding to the microservice application is determined based on the target anomalous trace data. Further, the anomalous trace node within the target anomalous trace is determined, thereby improving accuracy of determining the anomalous trace node.

Further, after the anomalous trace node is determined, considering that the anomalous node causes normal running of the microservice application, subsequent anomaly feedback and anomaly processing need to be performed on the anomalous trace node. A specific implementation is as follows.

Anomaly information is generated based on the anomalous trace node, and the anomaly information is fed back to an information receiver corresponding to the microservice application.

Specifically, the anomaly information may include information such as a trace node identifier, an anomaly type, and an anomalous time of an anomalous trace node. The information receiver may be a client or a user that performs root cause localization.

Based on the above, the anomaly type and the anomalous time of the anomalous trace node are determined. The anomaly information is generated based on the information such as the trace node identifier, the anomaly type, and the anomalous time of the anomalous trace node. The anomaly information is fed back to the information receiver corresponding to the microservice application.

Still referring to the foregoing example, after the anomalous trace node is determined, a trace node label P of the anomalous trace node and an anomaly type of the anomalous trace node such as a computation anomaly, and an anomaly occurring time are determined. The anomaly information is generated based on the node label P, the computation anomaly, and the anomaly occurring time of the anomalous trace node, and is sent to the client or the user.

Based on the above, the historical trace data corresponding to the microservice application is obtained, and the target anomaly localization model corresponding to the historical trace data is determined; the to-be-processed trace data set corresponding to the microservice application is determined, the to-be-processed trace data set is cluster, and the centroid trace data is determined based on the clustering result; the centroid trace data is inputted into the target anomaly localization model, to obtain the anomalous trace node information corresponding to the centroid trace data; and the target anomalous trace corresponding to the microservice application is determined based on the anomalous trace node information, and the anomalous trace node is determined within the target anomalous trace. Model fine-tuning is performed based on the initial anomaly localization model, so that the adjusted initial anomaly localization model is applicable to a specific microservice application, and the initial anomaly localization model has relatively wide applicability and a relatively strong generalization capability. When the root cause localization is performed through the target anomaly localization model, the centroid trace data is selected to perform the root cause localization, thereby increasing a root cause localization speed of the microservice application.

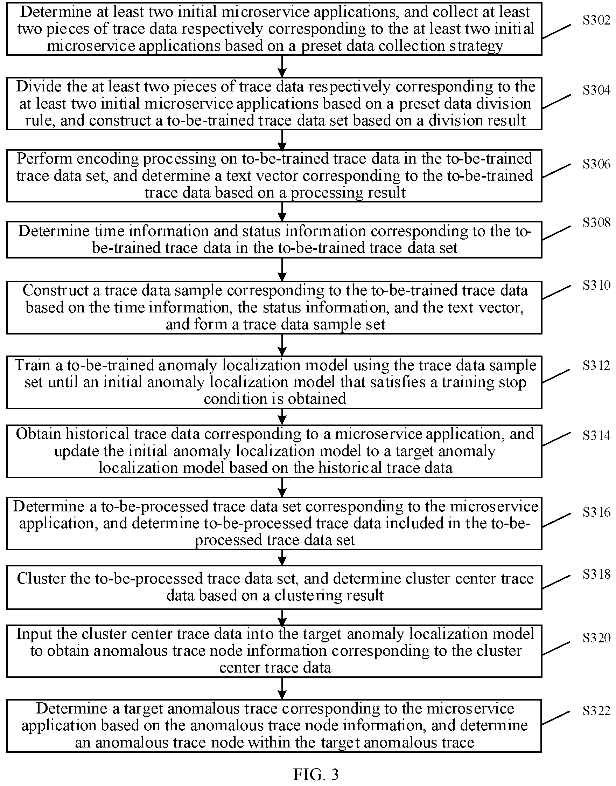

With reference to FIG. 3, the root cause localization method is further described by using the application of the root cause localization method provided in this specification to root cause localization as an example. FIG. 3 shows a flowchart of a processing process of a root cause localization method according to an embodiment of this specification. The method specifically includes the following steps.

With the development of computer technologies, microservices on a cloud are developing rapidly. A microservice architecture is a service architecture that is highly scalable, highly available, and easy to maintain and update. Continuous expansion of a microservice scale makes an RPC dependency diagram complex, exacerbates a tail-of-scale effect (tail-of-scale effect), and makes many empirical rules unreliable. In the past, efforts on microservice performance debugging are based on correlations, empirical thresholds or inextensible algorithms, and deep learning models, none of which utilizes a microservice benchmark having a comparable production service scale for quantitative evaluation, making their accuracy and performance questionable in production scale microservices. When microservices scale, many heuristic methods for performing root cause analysis algorithms based on experience and rules become insufficiently reliable, and even cannot be verified.

In the related art, efforts on microservice performance debugging are based on correlations, empirical thresholds or inextensible algorithms and deep learning models, resulting in low accuracy and slow speed. When microservices scale, algorithms for performing root cause localization based on experience and rules become insufficiently unreliable, or even fail to implement root cause localization. Therefore, when a fault occurs, a new method needs to be used for fault root cause localization. To perform root cause diagnosis on Trace data of a microservice in a production environment and improve problem solving efficiency, this embodiment provides a root cause localization method.

Step S302: Determine at least two initial microservice applications, and collect at least two pieces of trace data respectively corresponding to the at least two initial microservice applications based on a preset data collection strategy.

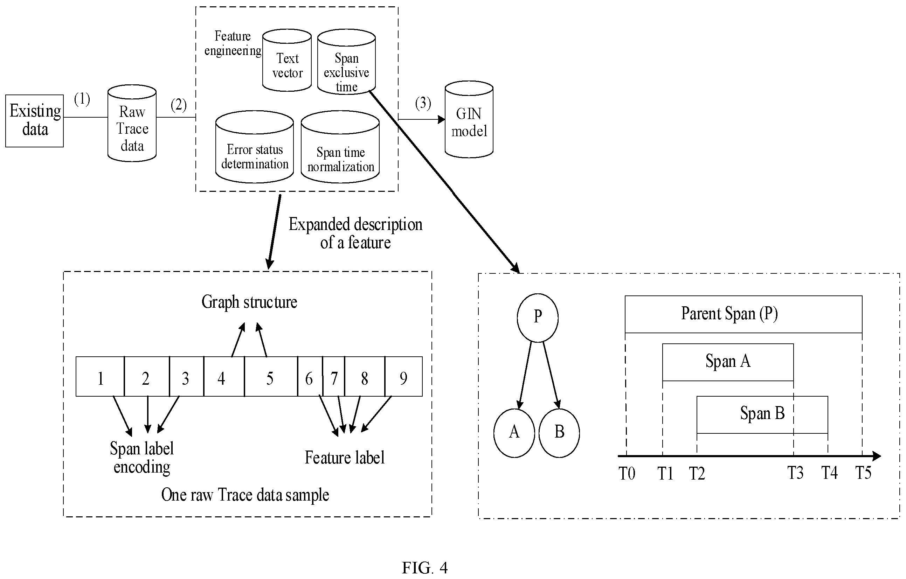

To improve data sample richness, Trace data of different business systems is collected during collecting trace data, so that a generalization capability of a later model can be improved. As shown in FIG. 4, during data collection, existing data generated by a plurality of business systems is obtained and is used as raw Trace data. The collection of the trace data may be implemented through Open Telemetry (a distributed link trace standard).

Step S304: Divide the at least two pieces of trace data respectively corresponding to the at least two initial microservice applications based on a preset data division rule, and construct a to-be-trained trace data set based on a division result.

Because a relatively large amount of raw trace data is collected, trace data in a business system needs to be divided based on a Service dimension and sampled according to a certain distribution based on a consuming time of running of a service, so that training samples can cover all service nodes and Trace data forms as many as possible.

Step S306: Perform encoding processing on to-be-trained trace data in the to-be-trained trace data set, and determine a text vector corresponding to the to-be-trained trace data based on a processing result.

Feature engineering is performed on the raw Trace data. The feature engineering includes steps such as text vector, Span exclusive time, error status determination, and Span exclusive time normalization. In the step of text vector, the raw trace data is processed through an SBert model to implement text-to-vector conversion.

Step S308: Determine time information and status information corresponding to the to-be-trained trace data in the to-be-trained trace data set.

An exclusive time of a Span and a real status of the Span in Trace data are calculated and used as label information for subsequent model training. Trace data of an Open Telegraphy protocol is processed, so that an RPC Dependency Graph (remote procedure call dependency graph) is constructed through SpanID and parentSpanID in the data. The dependency graph is renamed through a corresponding (Service, name, kind). A start time (startTime), an end time (endTime), a consuming time (duration), and a status code (status Code) of the Trace are actively obtained herein.

Service and name in Trace data are encoded with semantic information (converted into a vector of 768 dimensions through the SBert). During encoding, a special character and a hexadecimal code need to be deleted, and upper-case and lower-case letters are uniformly converted. Span exclusive time is calculated. A duration of a synchronization span of a non-leaf node includes a time spent in the service and a waiting time for a child span thereof. Separating the duration of the span from the waiting time may help locate a root cause for the high-delay Trace, because the duration of the span may be used to predict a potential saved amount of time, how much time may be saved if a performance problem related to the span is relieved. In FIG. 4, an exclusive time of parent Span (P) is (T1-T0)+(T5-T4), an exclusive time of Span (A) is T3-T1, and an exclusive time of Span (B) is T4-T2. Conversion of a consuming time of a Span: a duration value is scaled through logarithmic transformation with a base of 10. In addition, normalization is performed through a global mean value of 4.0 and a standard deviation of 1.0, so that an anomaly localization model may be directly applied to trace data sets without rescaling.

Step S310: Construct a trace data sample corresponding to the to-be-trained trace data based on the time information, the status information, and the text vector, and form a trace data sample set.

In FIG. 4, a feature is described in detail. In the structure of the figure, 1, 2, 3 respectively represent Service (service), operation (business), kind (kind), 4, 5 respectively represent SpanID and parent SpanID, and 6, 7, 8, and 9 respectively represent start (start time), end (end time), duration (consuming time), and status (status). The structure of the figure is a Trace data sample.

Step S312: Train a to-be-trained anomaly localization model using the trace data sample set until an initial anomaly localization model that satisfies a training stop condition is obtained.

A GIN model is trained using the trace data sample set to obtain an anomaly localization model having a generalization capability. A count-real-time query is generated to perform root cause localization for an anomalous Trace link. A CBN (Causal Bayesian Networks, a Bayesian theory-based causal inference network) is used to describe propagation of error information in the Trace data. A GIN (Graph Isomorphism Network) is used to perform embedding coding on the Trace link data. Learning is performed through a particular loss function, to finally complete learning of embedded features. A counterfactual method is used to perform root-cause analysis. The counterfactual query refers to what are an expected trace duration and an error status if some spans are restored to a normal status in a particular case. In other words, this query is what is an operational situation of an entire system based on an assumed situation, namely, an assumption that some spans are in a normal status.

Step S314: Obtain historical trace data corresponding to a microservice application, and update the initial anomaly localization model to the target anomaly localization model based on the historical trace data.

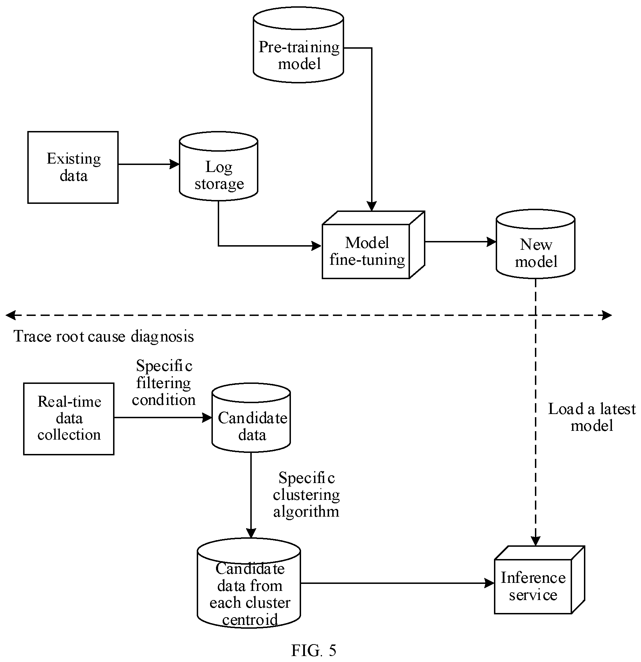

After the initial anomaly localization model having an anomaly root cause localization capability is obtained, application of the initial anomaly localization model may be implemented. As shown in FIG. 5, existing data under a microservice application is obtained as historical trace data for fine tuning of an initial anomaly localization model. Model fine-tuning is performed on the initial anomaly localization model through combining the existing data and log data in log storage, to implement model pre-training and obtain a new model applicable to a current microservice application, namely, a target anomaly localization model.

Step S316: Determine a to-be-processed trace data set corresponding to the microservice application, and determine to-be-processed trace data included in the to-be-processed trace data set.

When root cause diagnosis is performed for the Trace in practice, trace data is collected in a manner of collecting data in real time, the collected trace data is filtered based on a specific filter condition to obtain candidate data, and a to-be-processed trace data set on which the root cause diagnosis needs to be performed in the microservice application is constructed based on the candidate data.

Step S318: Cluster the to-be-processed trace data set, and determine centroid trace data based on a clustering result.

The candidate data is clustered through a particular clustering algorithm, to obtain candidate data from each cluster centroid. A Span identifier is composed of a label thereof: a (Service, name, kind) tuple, and an error status thereof and labels of all ancestor Spans within a maximum distance of $d\_max$, so as to reflect a structure and a status of a given Trace. Different spans sharing a same identifier are merged in a set, and its weight is equal to a sum of their durations. When two traces have similar structures and execution statuses, same elements with similar weights may be found in the two trace sets. We use an extended Jaccard index to calculate a similarity between trace sets. Clustering is performed through a DBSCAN algorithm to obtain a Trace cluster having similar structures, and a representative (cluster centroid) trace link is found therefrom as a trace link to be subjected to root cause analysis.

Step S320: Input the centroid trace data into the target anomaly localization model to obtain anomalous trace node information corresponding to the centroid trace data.

A new model obtained after the initial anomaly localization model is updated is loaded, and inferring is performed on candidate data from each cluster centroid based on the new model, to implement root cause localization for candidate data from each cluster centroid.

Step S322: Determine a target anomalous trace corresponding to the microservice application based on the anomalous trace node information, and determine an anomalous trace node within the target anomalous trace.

After the anomalous trace node corresponding to candidate data from each cluster centroid is determined, an anomalous trace node where an anomaly is located is determined, and anomaly processing is performed on the anomalous node, or anomaly information is recorded.

In a practical application, microservices may also be synthesized to provide verification data of a larger scale. In open source data, available microservice systems are not complex. Service nodes involved therein have a small quantity of types, which cannot accurately reflect the scale and complexity of the microservice system in a real production environment. For limited microservice systems, capabilities of individual evaluation systems cannot be accurately evaluated either. Therefore, a microservice generation system is developed during a stage of experimental evaluation, which can support generation of a microservice system having a complex network structure and provide a common fault injection means.

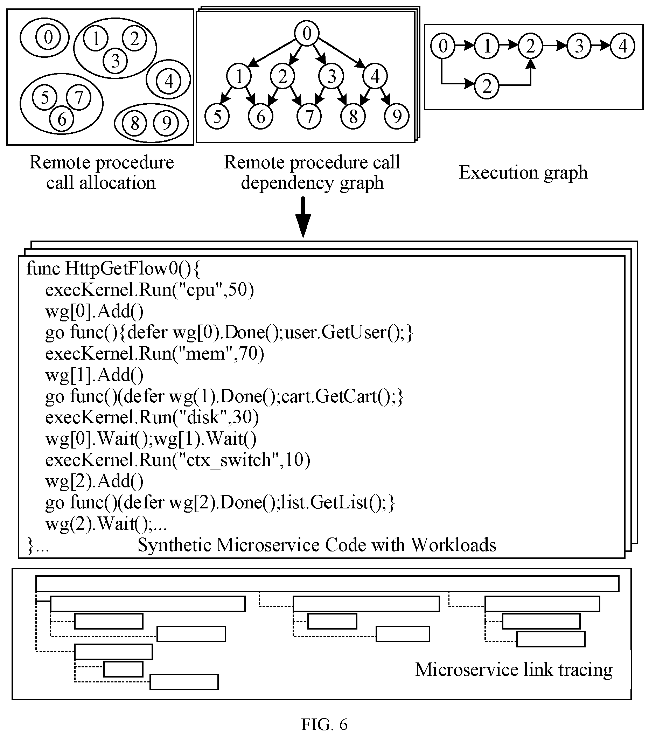

As shown in FIG. 6, several Services (0-9) are generated first, and RPCs are allocated to different Services to constitute an entire microservice system. The system marks a service as a front-end, a middleware, a rear-end, and a leaf node randomly. These services have different positions and fan-out degrees in an RPC dependency diagram. A group of commonly used service and RPC names are further collected and allocated to the Services and the RPCs, to make their semantics more realistic in the Trace link data. A logical RPC dependency relationship diagram is generated from the foregoing generated Services and RPCs based on some policies. The execution diagram describes an order and a dependency relationship of child RPCs called by a same parent node. An edge from a parent RPC to a child RPC indicates that the child RPC may be directly called by the parent node without waiting for a result of any other child RPC. An edge between two child RPCs means that after a response of a source RPC is received and processed, a target RPC is called. Through the foregoing steps, the microservice system may be relatively clearly generated. Different types of services (traffic node, disk IO intensive node, and computation intensive node, and the like) are attached to respective nodes. The microservice system is deployed on a cloud platform. In cooperation with relevant data collectors, subsequent algorithm verification may be performed.

In this embodiment, a GNN-based model is designed to identify a root cause in a microservice. This model is better than previous efforts in terms of accuracy, performance, and flexibility, and especially performs better on a large scale. A distance metric manner is provided to measure a similarity between two traces for clustering. This metric manner can distinguish between traces having different calling paths and fault modes. To quantitatively evaluate a proposed method in a production-scale microservice, we design an evaluation method generated through a synthesis benchmark. This benchmark may be generated at any scale and deployed in a k8s cluster, to imitate a behavior of a real production service.

Based on the above, the historical trace data corresponding to the microservice application is obtained, and the target anomaly localization model corresponding to the historical trace data is determined; the to-be-processed trace data set corresponding to the microservice application is determined, the to-be-processed trace data set is cluster, and the centroid trace data is determined based on the clustering result; the centroid trace data is inputted into the target anomaly localization model, to obtain the anomalous trace node information corresponding to the centroid trace data; and the target anomalous trace corresponding to the microservice application is determined based on the anomalous trace node information, and the anomalous trace node is determined within the target anomalous trace. Model fine-tuning is performed based on the initial anomaly localization model, so that the adjusted initial anomaly localization model is applicable to a specific microservice application, and the initial anomaly localization model has relatively wide applicability and a relatively strong generalization capability. When the root cause localization is performed through the target anomaly localization model, the centroid trace data is selected to perform the root cause localization, thereby increasing a root cause localization speed of the microservice application.

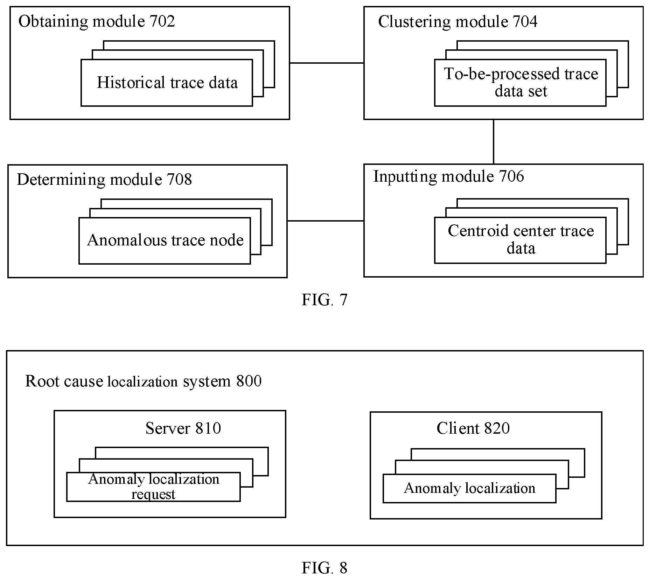

Corresponding to the foregoing method embodiments, this specification further provides an embodiment of a root cause localization apparatus. FIG. 7 shows a schematic structural diagram of a root cause localization apparatus according to an embodiment of this specification. As shown in FIG. 7, the apparatus includes:

an obtaining module 702, configured to obtain historical trace data corresponding to a microservice application, and update an initial anomaly localization model to a target anomaly localization model based on the historical trace data;
a clustering module 704, configured to determine a to-be-processed trace data set corresponding to the microservice application, cluster the to-be-processed trace data set, and determine centroid trace data based on a clustering result;
an inputting module 706, configured to input the centroid trace data into the target anomaly localization model, to obtain anomalous trace node information corresponding to the centroid trace data; and
a determining module 708, configured to determine a target anomalous trace corresponding to the microservice application based on the anomalous trace node information, and determine an anomalous trace node within the target anomalous trace.

In an optional embodiment, the obtaining module 702 is further configured to:

update the initial anomaly localization model to the target anomaly localization model corresponding to the historical trace data, where training of the initial anomaly localization model includes: determining a to-be-trained trace data set based on at least two initial microservice applications; constructing a trace data sample set based on at least two pieces of to-be-trained trace data included in the to-be-trained trace data set; and
training the to-be-trained anomaly localization model using the trace data sample set until an initial anomaly localization model that satisfies a training stop condition is obtained.

In an optional embodiment, the obtaining module 702 is further configured to:
convert to-be-trained trace data into a text vector, and determine time information and status information of the to-be-trained trace data; and update the text vector based on the time information and the status information, and construct a trace data sample corresponding to the to-be-trained trace data based on the updated text vector.

In an optional embodiment, the obtaining module 702 is further configured to:
determine the at least two initial microservice applications; collect at least two pieces of trace data respectively corresponding to the at least two initial microservice applications based on a preset data collection strategy; divide the at least two pieces of trace data respectively corresponding to the at least two initial microservice applications based on a preset data division rule, and determine a to-be-trained trace data subset corresponding to each initial microservice application based on a division result; and construct the to-be-trained trace data set based on at least two to-be-trained trace data subsets.

In an optional embodiment, the obtaining module 702 is further configured to:
perform encoding processing on the to-be-trained trace data, and determine the text vector corresponding to the to-be-trained trace data based on a processing result; calculate a start time and an end time of sub-trace data included in the to-be-trained trace data, and determine time information corresponding to the to-be-trained trace data based on a calculation result; and use sub-status information of the sub-trace data included in the to-be-trained trace data as status information of the to-be-trained trace data.

In an optional embodiment, the inputting module 706 is further configured to:

obtain at least two pieces of to-be-processed trace data corresponding to the microservice application based on a preset data obtaining strategy; and construct the to-be-processed trace data set using the at least two pieces of to-be-processed trace data.

In an optional embodiment, the inputting module 706 is further configured to:

determine to-be-processed trace data included in the to-be-processed trace data set; and cluster the to-be-processed trace data set based on a data structure, a trace status, and a time weight of each piece of to-be-processed trace data in the to-be-processed trace data set, and determine the centroid trace data based on the clustering result.

In an optional embodiment, the determining module 708 is further configured to:

determine target anomalous trace data in the to-be-processed trace data set based on the anomalous trace node information; determine the target anomalous trace corresponding to the microservice application based on the target anomalous trace data; and determine the anomalous trace node within the target anomalous trace based on the anomalous trace node information.

In an optional embodiment, the determining module 708 is further configured to:

generate anomaly information based on the anomalous trace node; and feed back the anomaly information to an information receiver corresponding to the microservice application.

Based on the above, the historical trace data corresponding to the microservice application is obtained, and the target anomaly localization model corresponding to the historical trace data is determined; the to-be-processed trace data set corresponding to the microservice application is determined, the to-be-processed trace data set is cluster, and the centroid trace data is determined based on the clustering result; the centroid trace data is inputted into the target anomaly localization model, to obtain the anomalous trace node information corresponding to the centroid trace data; and the target anomalous trace corresponding to the microservice application is determined based on the anomalous trace node information, and the anomalous trace node is determined within the target anomalous trace. Model fine-tuning is performed based on the initial anomaly localization model, so that the adjusted initial anomaly localization model is applicable to a specific microservice application, and the initial anomaly localization model has relatively wide applicability and a relatively strong generalization capability. When the root cause localization is performed through the target anomaly localization model, the centroid trace data is selected to perform the root cause localization, thereby increasing a root cause localization speed of the microservice application.

The above is a schematic solution of a root cause localization apparatus according to this embodiment. It should be noted that the technical solution of the root cause localization apparatus and the technical solution of the foregoing root cause localization method belong to the same concept. For details not described in detail in the technical solution of the root cause localization apparatus, reference may be made to the description of the technical solution of the foregoing root cause localization method.

Corresponding to the foregoing method embodiments, this specification further provides an embodiment of a root cause localization system. FIG. 8 is an architectural diagram of a root cause localization system according to an embodiment of this specification. A root cause localization system 800 includes a server 810 and a client 820.

The client 820 is configured to submit an anomaly localization request to the server 810 for a target microservice application.

The server 810 is configured to: parse the anomaly localization request to obtain debugging trace data and target trace data; update an initial anomaly localization model to a to-be-used anomaly localization model based on the debugging trace data; cluster the target trace data, and determine to-be-inputted trace data based on a clustering result; input the to-be-inputted trace data to the to-be-used anomaly localization model, to obtain anomalous node information corresponding to the target microservice application; determine an anomalous node based on the anomalous node information, and generate anomaly feedback information based on the anomalous node and the anomalous node information; and send the anomaly feedback information to the client 820 as a response to the anomaly localization request.

The client 820 is configured to perform anomaly processing on the target microservice application based on the anomaly feedback information.

In a practical application, the client corresponds to any requester with a demand for microservice root cause localization. The requester submits an anomaly localization request to the server by operating the client. The server parses the anomaly localization request and obtains the debugging trace data and the target trace data. The debugging trace data is used to perform fine tuning on an initial anomaly localization model, so that a prediction capability of an adjusted initial anomaly localization model can implement anomaly localization on the trace data of the target microservice application. The initial anomaly localization model is updated to a to-be-used anomaly localization model based on the debugging trace data. The target trace data is clustered, and the to-be-inputted trace data is determined based on the clustering result. The to-be-inputted trace data is inputted to the to-be-used anomaly localization model, to obtain the anomalous node information corresponding to the target microservice application. An anomalous node is determined based on the anomalous node information, and anomaly feedback information is generated based on the anomalous node and the anomalous node information. The anomaly feedback information is sent to the client as a response to the anomaly localization request. After receiving the anomaly feedback information, the client may perform anomaly processing on the target microservice application based on the anomaly feedback information. The anomaly processing includes, but is not limited to, restoring from the anomaly, recording an anomaly type and an anomaly cause, and sending the anomaly feedback information to an anomaly handler.

Based on the above, model fine-tuning is performed based on the initial anomaly localization model, so that the adjusted initial anomaly localization model is applicable to a specific microservice application, and the initial anomaly localization model has relatively wide applicability and a relatively strong generalization capability. When the root cause localization is performed through the target anomaly localization model, the centroid trace data is selected to perform the root cause localization, thereby increasing a root cause localization speed of the microservice application.

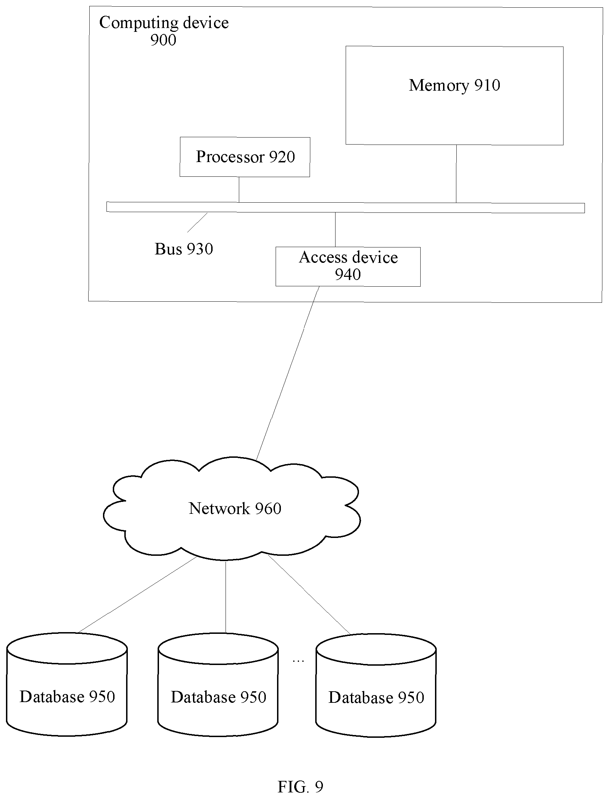

FIG. 9 is a structural block diagram of a computing device 900 according to an embodiment of this specification. Components of the computing device 900 include, but are not limited to, a memory 910 and a processor 920. The processor 920 is connected to the memory 910 through a bus 930, and a database 950 is configured to store data.

The computing device 900 further includes an access device 940. The access device 940 enables the computing device 900 to perform communication through one or more networks 960. Examples of the networks include a public switched telephone network (PSTN, Public Switched Telephone Network), a local area network (LAN, Local Area Network), a wide area network (WAN, Wide Area Network), a personal area network (PAN, Personal Area Network), or a combination of communication networks such as the Internet. The access device 940 may include one or more of any type of wired or wireless network interfaces (for example, a network interface controller (NIC, network interface controller)), such as an IEEE802.11 wireless local area network (WLAN, Wireless Local Area Network) wireless interface, a worldwide interoperability for microwave access (Wi-MAX, Worldwide Interoperability for Microwave Access) interface, an Ethernet interface, a universal serial bus (USB, Universal Serial Bus) interface, a cellular network interface, a Bluetooth interface, and near field communication (NFC, Near Field Communication).

In an embodiment of this specification, the foregoing components of the computing device 900 and other components not shown in FIG. 9 may be connected to each other, for example, through a bus. It should be understood that the structural block diagram of the computing device shown in FIG. 9 is used for illustration, and is not a limitation on the scope of this specification. A person skilled in the art may add other components or replace a component with another component as required.

The computing device 900 may be any type of stationary or mobile computing device, including a mobile computer or a mobile computing device (such as a tablet computer, a personal digital assistant, a laptop computer, a notebook computer, or a netbook), a mobile phone (such as a smartphone), a wearable computing device (such as a smartwatch or smart glasses), or another type of mobile device, or a stationary computing device such as a desktop computer or a personal computer (PC, Personal Computer). The computing device 900 may be a stationary or mobile server.

The processor 920 is configured to execute the following computer-executable instructions. When the computer-executable instructions are executed by a processor, steps of the foregoing root cause localization method are implemented.

The above is an illustrative solution of the computing device in this embodiment. It should be noted that the technical solution of the computing device and the technical solution of the foregoing root cause localization method belong to the same concept. For details not described in detail in the technical solution of the computing device, reference may be made to the description of the technical solution of the foregoing root cause localization method.

An embodiment of this specification further provides a computer-readable storage medium storing computer-executable instructions. When the computer-executable instructions are executed by a processor, steps of the foregoing root cause localization method are implemented.

The above is an illustrative solution of the computer-readable storage medium of this embodiment. It should be noted that, the technical solution of the storage medium and the technical solution of the foregoing root cause localization method belong to the same concept. For details not described in detail in the technical solution of the storage medium, reference may be made to the description of the technical solution of the foregoing root cause localization method.

An embodiment of this specification further provides a computer program. The computer program, when executed in a computer, causes the computer to perform the steps of the foregoing root cause localization method.

The above is an illustrative solution of the computer program in this embodiment. It should be noted that the technical solutions of the computer program belong to the same concept as the technical solutions of the above root cause localization method. For any details not detailed in the technical solutions of the computer program, reference may be made to the description of the technical solution of the foregoing root cause localization method.

Specific embodiments of this specification are described above. Other embodiments fall within the scope of the appended claims. In some cases, the actions or steps described in the claims may be performed in a sequence different from that in the embodiments, and desired results may still be achieved. In addition, the processes depicted in the drawings unnecessarily require the specific sequence or the successive sequence that is shown to implement an expected result. In some implementations, multitasking and parallel processing is also feasible or may be advantageous.

The computer instructions include computer program code. The computer program code may be in the form of source code, object code, and an executable file, some intermediate forms, or the like. The computer-readable medium may include: any entity or apparatus capable of carrying the computer program code, a recording medium, a USB flash disk, a mobile hard disk, a magnetic disk, an optical disk, a computer memory, a read-only memory (ROM, Read-Only Memory), a random access memory (RAM, Random Access Memory), an electric carrier signal, a telecommunication signal, a software distribution medium, and the like. It should be noted that the content included in the computer-readable medium may be properly added or omitted according to the requirements of patent practice. For example, in some regions, according to patent practice, the computer-readable medium does not include the electrical carrier signal and the telecommunication signal.

It should be noted that for brief description, the foregoing method embodiments are represented as a series of actions. However, it is to be appreciated by a person skilled in the art that the embodiments of this specification are not limited to the described order of the actions, because some steps may be performed in other orders or simultaneously according to the embodiments of this specification. In addition, it should be understood by a person skilled in the art that the embodiments described in the specification all belong to optional embodiments and the actions and modules involved are not necessarily required by the embodiments of this specification.

In the forgoing embodiments, the descriptions of the embodiments have respective emphasis. For parts not described in detail in a certain embodiment, reference may be made to related descriptions of another embodiment.

The preferred embodiments of this specification disclosed above are intended to assist in describing this specification. The optional embodiments do not describe all details in detail, and do not limit the present invention to the specific implementations. Apparently, many modifications and changes may be made based on the contents of the embodiments of this specification. The embodiments are selected and described in detail in this specification to better explain the principles and practical applications of the embodiments of this specification, so that a person skilled in the art can better understand and utilize this specification. This specification is limited by the claims and the full scope and equivalents thereof.

**Claims**

1. A root cause localization method, comprising:

   obtaining historical trace data corresponding to a microservice application, and determining a target anomaly localization model corresponding to the historical trace data;
   determining a to-be-processed trace data set corresponding to the microservice application, clustering the to-be-processed trace data set, and determining centroid trace data based on a clustering result;
   inputting the centroid trace data into the target anomaly localization model, to obtain anomalous trace node information corresponding to the centroid trace data; and
   determining a target anomalous trace corresponding to the microservice application based on the anomalous trace node information, and determining an anomalous trace node within the target anomalous trace.

2. The method according to claim 1, wherein the determining a target anomaly localization model corresponding to the historical trace data comprises:
   updating an initial anomaly localization model to the target anomaly localization model corresponding to the historical trace data, wherein training of the initial anomaly localization model comprises: determining a to-be-trained trace data set based on at least two initial microservice applications; constructing a trace data sample set based on at least two pieces of to-be-trained trace data comprised in the to-be-trained trace data set; and training a to-be-trained anomaly localization model using the trace data sample set until an initial anomaly localization model that satisfies a training stop condition is obtained.

3. The method according to claim 2, wherein construction of any one trace data sample in the trace data sample set comprises:

   converting to-be-trained trace data into a text vector, and determining time information and status information of the to-be-trained trace data; and
   updating the text vector based on the time information and the status information, and constructing a trace data sample corresponding to the to-be-trained trace data based on the updated text vector.

4. The method according to claim 2, wherein the determining the to-be-trained trace data set based on the at least two initial microservice applications comprises:

determining the at least two initial microservice applications;

collecting at least two pieces of trace data respectively corresponding to the at least two initial microservice applications based on a preset data collection strategy;

dividing the at least two pieces of trace data respectively corresponding to the at least two initial microservice applications based on a preset data division rule, and determining a to-be-trained trace data subset corresponding to each initial microservice application based on a division result; and

constructing the to-be-trained trace data set based on at least two to-be-trained trace data subsets.

5. The method according to claim 3, wherein the converting the to-be-trained trace data into the text vector, and determining the time information and the status information of the trained trace data comprises:

performing encoding processing on the to-be-trained trace data, and determining the text vector corresponding to the to-be-trained trace data based on a processing result;

calculating a start time and an end time of sub-trace data comprised in the to-be-trained trace data, and determining time information corresponding to the to-be-trained trace data based on a calculation result; and

using sub-status information of the sub-trace data comprised in the to-be-trained trace data as status information of the to-be-trained trace data.

6. The method according to claim 1, wherein the determining the to-be-processed trace data set corresponding to the microservice application comprises:

obtaining at least two pieces of to-be-processed trace data corresponding to the microservice application based on a preset data obtaining strategy; and

constructing the to-be-processed trace data set using the at least two pieces of to-be-processed trace data.

7. The method according to claim 1, wherein the clustering the to-be-processed trace data set, and determining the centroid trace data based on the clustering result comprises:

determining to-be-processed trace data comprised in the to-be-processed trace data set; and

clustering the to-be-processed trace data set based on a data structure, a trace status, and a time weight of each piece of to-be-processed trace data in the to-be-processed trace data set, and determining the centroid trace data based on the clustering result.

8. The method according to claim 1, wherein the determining the target anomalous trace corresponding to the microservice application based on the anomalous trace node information, and determining the anomalous trace node within the target anomalous trace comprises:

determining target anomalous trace data in the to-be-processed trace data set based on the anomalous trace node information;

determining the target anomalous trace corresponding to the microservice application based on the target anomalous trace data; and

determining the anomalous trace node within the target anomalous trace based on the anomalous trace node information.

9. The method according to claim 1, wherein after the step of determining the anomalous trace node within the target anomalous trace is performed, the method further comprises:

generating anomaly information based on the anomalous trace node; and

feeding back the anomaly information to an information receiver corresponding to the microservice application.

10. A root cause localization system, comprising a server and a client, wherein

the client is configured to submit an anomaly localization request to the server for a target microservice application;

the server is configured to: parse the anomaly localization request to obtain debugging trace data and target trace data; update an initial anomaly localization model to a to-be-used anomaly localization model based on the debugging trace data; cluster the target trace data, and determine to-be-inputted trace data based on a clustering result; input the to-be-inputted trace data to the to-be-used anomaly localization model, to obtain anomalous node information corresponding to the target microservice application; determine an anomalous node based on the anomalous node information, and generate anomaly feedback information based on the anomalous node and the anomalous node information; and send the anomaly feedback information to the client as a response to the anomaly localization request; and

the client is configured to perform anomaly processing on the target microservice application based on the anomaly feedback information.

11. A root cause localization apparatus, comprising:

an obtaining module, configured to obtain historical trace data corresponding to a microservice application, and determine a target anomaly localization model corresponding to the historical trace data;

a clustering module, configured to determine a to-be-processed trace data set corresponding to the microservice application, cluster the to-be-processed trace data set, and determine centroid trace data based on a clustering result;

an inputting module, configured to input the centroid trace data into the target anomaly localization model to obtain anomalous trace node information corresponding to the centroid trace data; and

a determining module, configured to determine a target anomalous trace corresponding to the microservice application based on the anomalous trace node information, and determine an anomalous trace node within the target anomalous trace.

12. A computing device, comprising:

a memory and a processor, wherein

the memory is configured to store computer-executable instructions, the processor is configured to execute the computer-executable instructions, and when the computer-executable instructions are executed by the processor, steps of the root cause localization method according to any one of claims 1 to 9 are implemented.

13. A computer-readable storage medium, storing computer-executable instructions, wherein when the computer-executable instructions are executed by a processor, steps of the root cause localization method according to any one of claims 1 to 9 are implemented.

FIG. 1

EP 4 764 905 A1

| Obtain historical trace data corresponding to a microservice application, and determine a target anomaly localization model corresponding to the historical trace data | S202 |

| Determine a to-be-processed trace data set corresponding to the microservice application, cluster the to-be-processed trace data set, and determine centroid trace data based on a clustering result | S204 |

| Input the centroid trace data into the target anomaly localization model to obtain anomalous trace node information corresponding to the centroid trace data | S206 |

| Determine a target anomalous trace corresponding to the microservice application based on the anomalous trace node information, and determine an anomalous trace node within the target anomalous trace | S208 |

FIG. 2

Determine at least two initial microservice applications, and collect at least two pieces of trace data respectively corresponding to the at least two initial microservice applications based on a preset data collection strategy ⟋ S302

Divide the at least two pieces of trace data respectively corresponding to the at least two initial microservice applications based on a preset data division rule, and construct a to-be-trained trace data set based on a division result ⟋ S304

Perform encoding processing on to-be-trained trace data in the to-be-trained trace data set, and determine a text vector corresponding to the to-be-trained trace data based on a processing result ⟋ S306

Determine time information and status information corresponding to the to-be-trained trace data in the to-be-trained trace data set ⟋ S308

Construct a trace data sample corresponding to the to-be-trained trace data based on the time information, the status information, and the text vector, and form a trace data sample set ⟋ S310

Train a to-be-trained anomaly localization model using the trace data sample set until an initial anomaly localization model that satisfies a training stop condition is obtained ⟋ S312

Obtain historical trace data corresponding to a microservice application, and update the initial anomaly localization model to a target anomaly localization model based on the historical trace data ⟋ S314

Determine a to-be-processed trace data set corresponding to the microservice application, and determine to-be-processed trace data included in the to-be-processed trace data set ⟋ S316

Cluster the to-be-processed trace data set, and determine cluster center trace data based on a clustering result ⟋ S318

Input the cluster center trace data into the target anomaly localization model to obtain anomalous trace node information corresponding to the cluster center trace data ⟋ S320

Determine a target anomalous trace corresponding to the microservice application based on the anomalous trace node information, and determine an anomalous trace node within the target anomalous trace ⟋ S322

FIG. 3

FIG. 4

FIG. 5

Remote procedure
call allocation

Remote procedure call
dependency graph

Execution graph

```
func HttpGetFlow0(){
    execKernel.Run("cpu",50)
    wg[0].Add()
    go func(){defer wg[0).Done();user.GetUser();}
    execKernel.Run("mem",70)
    wg[1].Add()
    go func()(defer wg(1).Done();cart.GetCart();}
    execKernel.Run("disk",30)
    wg[0].Wait();wg[1).Wait()
    execKernel.Run("ctx_switch",10)
    wg[2).Add()
    go func()(defer wg[2).Done();list.GetList();}
    wg(2).Wait();...
}...            Synthetic Microservice Code with Workloads
```

Microservice link tracing

FIG. 6

| Obtaining module 702 | Clustering module 704 |
|---|---|
| Historical trace data | To-be-processed trace data set |

| Determining module 708 | Inputting module 706 |
|---|---|
| Anomalous trace node | Centroid center trace data |

FIG. 7

Root cause localization system 800

| Server 810 | Client 820 |
|---|---|
| Anomaly localization request | Anomaly localization |

FIG. 8

Computing device 900

Memory 910

Processor 920

Bus 930

Access device 940

Network 960

Database 950    Database 950    ...    Database 950

FIG. 9

## INTERNATIONAL SEARCH REPORT

| International application No. |
|---|
| **PCT/CN2024/103714** |

**A. CLASSIFICATION OF SUBJECT MATTER**

G06F18/24(2023.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI; 3GPP: 定位, 根因, 节点, 聚类, 链路, 模型, 微服务, 业务, 异常, 故障, root node, cluster, Link, model, microservice, exception, fault

**C. DOCUMENTS CONSIDERED TO BE RELEVANT**

| Category* | Citation of document, with indication, where appropriate, of the relevant passages | Relevant to claim No. |
|---|---|---|
| A | CN 116561635 A (INDUSTRIAL AND COMMERCIAL BANK OF CHINA LIMITED) 08 August 2023 (2023-08-08) description, paragraphs [0004]-[0043] | 1-13 |
| A | CN 112019932 A (GUANGZHOU HUADUO NETWORK TECHNOLOGY CO., LTD.) 01 December 2020 (2020-12-01) entire document | 1-13 |
| A | CN 116149877 A (ALIPAY LABS (SINGAPORE) CO., LTD.) 23 May 2023 (2023-05-23) entire document | 1-13 |
| A | US 2022385542 A1 (TELEFONAKTIEBOLAGET LM ERICSSON PUBI) 01 December 2022 (2022-12-01) entire document | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 August 2024** | **07 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/103714**

| Patent document cited in search report | | | Publication date (day/month/year) | Patent family member(s) | | | Publication date (day/month/year) |
|---|---|---|---|---|---|---|---|
| CN | 116561635 | A | 08 August 2023 | None | | | |
| CN | 112019932 | A | 01 December 2020 | CN | 112019932 | B | 24 May 2022 |
| CN | 116149877 | A | 23 May 2023 | None | | | |
| US | 2022385542 | A1 | 01 December 2022 | WO | 2021063502 | A1 | 08 April 2021 |
| | | | | US | 11962474 | B2 | 16 April 2024 |
| | | | | EP | 4038832 | A1 | 10 August 2022 |

Form PCT/ISA/210 (patent family annex) (July 2022)